Europäisches Patentamt

European Patent Office

Office européen des brevets

(11) Publication number: **0 229 212**
**B1**

# EUROPEAN PATENT SPECIFICATION

(45) Date of publication of the patent specification:
09.05.90

(51) Int. Cl.⁵: **F16B 15/04**

(21) Application number: **86100520.5**

(22) Date of filing: **16.01.86**

(54) Nail.

(43) Date of publication of application:
**22.07.87 Bulletin 87/30**

(45) Publication of the grant of the patent:
**09.05.90 Bulletin 90/19**

(84) Designated Contracting States:
**AT CH DE FR GB LI NL SE**

(56) References cited:
**EP-A- 0 090 780
AT-B- 15 475
DE-C- 203 046
DE-C- 337 195
US-A- 1 428 111
US-A- 1 548 456**

(73) Proprietor: **WAKAI & CO. LTD., 2, Higashishimizu-cho Minami-ku Osaka-shi, Osaka 542(JP)**

(72) Inventor: **Ikuta, Kazuichi c/o Wakai & Co., Ltd., 3, Morikawachinishi 2-chome, Higashiosaka-shi Osaka(JP)**
Inventor: **Kaji, Katsuji c/o Wakai & Co., Ltd., 3, Morikawachinishi 2-chome, Higashiosaka-shi Osaka(JP)**
Inventor: **Yamamoto, Eiji c/o Wakai & Co., Ltd., 3, Morikawachinishi 2-chome, Higashiosaka-shi Osaka(JP)**

(74) Representative: **Glawe, Delfs, Moll & Partner Patentanwälte, Postfach 26 01 62 Liebherrstrasse 20, D-8000 München 26(DE)**

## Description

The present invention relates to an expandable nail comprising a nail body and a leg opening member, said nail body having a head and a shaft integral therewith, said shaft being divided into a plurality of legs separated by a slit extending axially over at least part of the length of said shaft, each leg having its inner surface tapered at its tip, and said leg opening member having an annular washer formed at one end and a wedge formed at its other end having tapered wedge surfaces of a shape to be received between said tapered inner leg surfaces for deflecting said legs outwardly when the nail body is driven into said leg opening member.

Such a nail is used to secure a work piece to foamed (or autoclaved lightweight) concrete, heat-insulating materials, etc.

A nail as mentioned above is known from US-A 1 548 456. A nail disclosed in said reference comprises a nail body and a leg opening member. Said nail body is formed as a shaft and is bifurcated at its tip end portion into fingers having their tips turned slightly outwardly. Said leg opening member is formed as a jacket with any suitable cross section. Within said jacket a wedge is formed near its pointed tip. When the shaft being guided along the inner wall of said jacket said bifurcated tips of said shaft are deflected at said wedge to turn outwardly.

Such a nail has the disadvantage that the jacket and the nail body thereof have to be driven separately, one after another, into a work piece. Otherwise, upon simultaneously driving into a work piece, the fingers of said shaft would already tend to spread apart at the very beginning of driving, at which the washer of said jacket would still not have butted against said work piece.

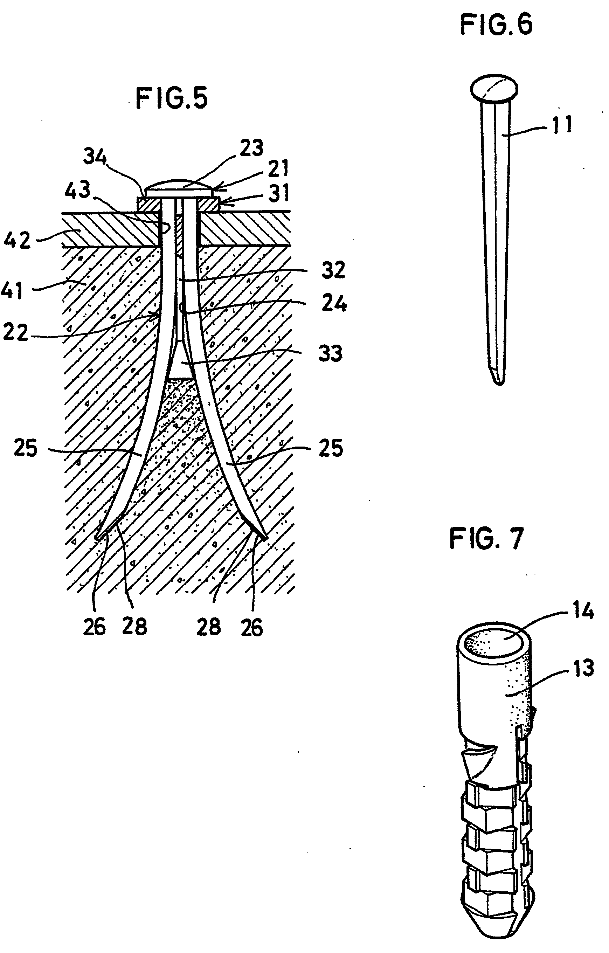

Some other examples of conventional fastener means used with foamed concrete, heat-insulating material and similar materials (hereinafter referred to as foamed concrete) are shown in figs. 6 and 7.

Fig. 6 shows a tapered nail 11 having four tapering sides. When driven into the material, it compresses foamed concrete with their tapering sides. This increases the frictional resistance between the nail and the foamed concrete and provides a resistance to getting-off or removal. This conventional nail loosens and gets off easily when subjected to vibration, because it resorts merely to the frictional resistance between the nail and the foamed concrete to maintain the resistance to removal.

Fig. 7 shows an anchor 13 made of synthetic resin and adapted to be driven into a hole formed in the foamed concrete. The anchor is formed with a hole 14 to receive a nail. For use of this anchor, a hole has to be formed beforehand in the foamed concrete. This is very inconvenient and requires a special tool for forming the hole.

An object of the present invention is to provide an expandable nail having a nail body and a leg opening member of a sufficient strength to be effectively driven into a work piece in one single driving operation.

In accordance with the present invention, there is provided a nail wherein said slit extends from the tip to the head of the nail, said legs are connected together by at least one breakable connecting portion bridging said slit at a distance from the tip of said legs, and said leg opening member has a guide portion to be received in said slit and providing an upper edge at a distance from said wedge, said breakable connecting portion having such a strength as to be broken by the upper edge of the guide member when the nail is further driven into a work piece after said washer has butted against the work piece.

The possibility of driving a nail body into concrete together with a leg opener in one single driving operation according to the present invention provides an improvement in handling with such nails.

Other objects and features of the present invention will become apparent from the following description taken with reference to the accompanying drawings, in which:

Fig. 1 is an exploded perspective view of the nail embodying the present invention;

Fig. 2 is a vertical sectional front view of the nail half-driven;

Fig. 3 is an enlarged horizontal sectional plan view of the nail taken along the line III - III of Fig. 2;

Fig. 4 is a vertical sectional side view of the nail half-driven;

Fig. 5 is a vertical sectional front view showing the nail fully driven;

Fig. 6 is a perspective view of a conventional nail; and

Fig. 7 is a perspective view of an anchor used in a conventional fastener.

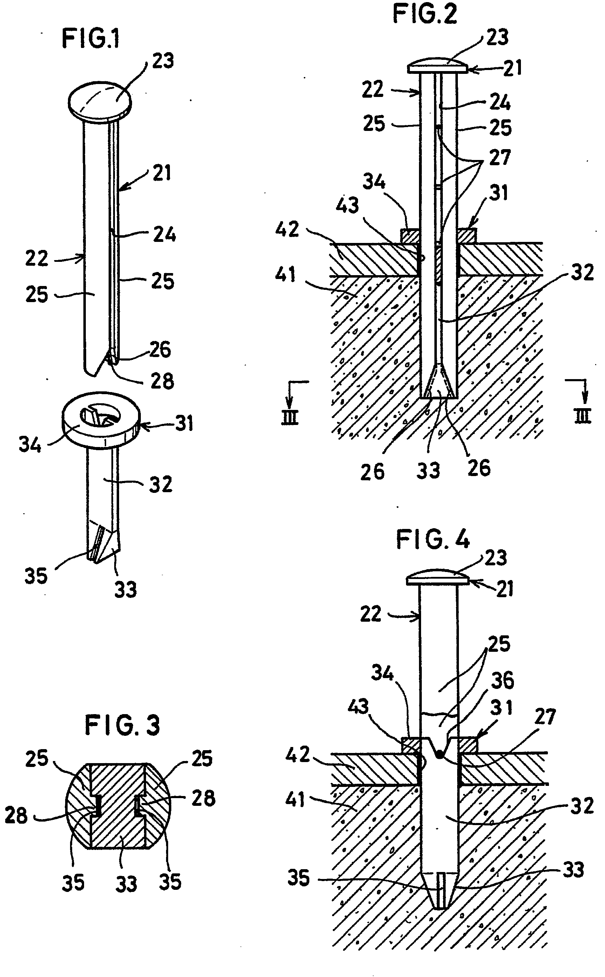

Referring to Fig. 1, the nail according to the present invention comprises a nail body 21, and a leg-opener 31 adapted to be put on the tip of the nail body 21.

The nail body 21 has a head 23 and a leg 22 divided into a pair of leg sections 25 by a slit 24 extending axially from the tip of the nail to the head 23. Each leg section 25 has a tapered surface 26 facing inwardly at its tip. The leg sections 25 are coupled together by a plurality of breakable portions 27 in the form of thin rods disposed in the slit 24.

The leg opener 31 has a wedge guide 32 in the form of a plate having such a thickness as to be received in the slit 24 and a width substantially equal to the diameter of the leg 22, a ring-shaped washer 34 formed at one end of the wedge guide 32, and a wedge 33 formed at the other end thereof. The leg opener 31 is formed as an integral unit. The wedge 33 has a pair of tapered surfaces so as to be snugly received between the tapered surfaces 26 on the leg sections 25, as shown in Fig. 2, when the leg opener 31 is put on the tip of the nail body 21.

Referring to Fig. 3, each of the leg sections 25 is formed with a projection 28 extending axially and the wedge 33 of the leg opener 31 is formed with a pair of grooves 35 extending axially to receive the projections 28 on the leg sections 25. This facilitates positioning of the leg opener 31 with respect to the nail body 21 and serves to guide the axial movement of the former relative to the latter.

The breakable portions 27 on the nail body 21 serve to position the leg opener 31 with respect to the nail body 21 and to connect the leg sections 25 together, thus preventing the leg portions from bending or getting apart from each other during various processings.

The breakable portions 27 are formed to have such a strength as to bear the pressure transmitted from the foamed concrete through the wedge guide 32 during an initial stage of nail driving and to be broken by the upper edge of the wedge guide 32 when the nail is driven further after the washer 34 has butted against a part 42 to be secured, as shown in Figs. 2 and 4. In the preferred embodiment, three breakable portions 27 are provided, but there is no intention of limiting the number of the portions to three. The upper edge of the wedge guide 32 is formed with a V-shaped recess 36 to contain the broken pieces of the breakable portions 27. The portions 27 may be either integrally formed with the leg portions 25 or formed as separate members of metal or synthetic resin inserted into transverse holes formed in the leg sections 25.

In use, firstly, the leg opener 31 is set on the nail body 21 by inserting the leg sections 25 into the hole in the washer 34 with the wedge guide 32 in the slit 24 of the nail body 21 until the upper edge of the wedge guide 32 butts the lowermost breakable rod 27.

In order to secure an object 42 to foamed concrete, the leg 22 of the nail body 21 with the leg opener 31 is driven into foamed concrete 41 through a hole 43 formed in the object 42 to be secured.

At the initial stage of driving, the pressure applied to the wedge 33 of the leg opener 31 is borne by the breakable portion 27 through the wedge guide 32. Therefore, the leg sections 25 advance straightly into the foamed concrete without opening until the washer 34 butts the object 42 to be secured, as shown in Figs. 2 and 4.

When the driving of the nail is continued even after the washer 34 has butted the object 42, the breakable portions 27 will be broken one after another by the wedge guide 32. As only the nail body 21 goes further into the foamed concrete, the leg sections 25 will be forced to open by the wedge 33 of the leg opener 31 as shown in Fig. 5, because the leg opener cannot move further. In so functioning, the tapered surfaces on the wedge 33 serve as a guide for guiding the leg sections 25 in opposite directions.

While the nail is being driven, the foamed concrete between the leg sections is fully compressed by the wedge 33 and the leg sections 25. The wedge 33 and the compressed foamed concrete between the leg sections 25 serve to prevent the leg sections 25 from restoring to their original positions. This assures a high resistance to pulling-off force applied to the nail. Fig. 5 shows a final state in which the nail is completely driven with its head 23 on the washer 34. Now, the object 42 is firmly secured to the foamed concrete.

## Claims

1. An expandable nail comprising a nail body and a leg opening member,
said nail body having a head and a shaft integral therewith, said shaft being divided into a plurality of legs separated by a slit extending axially over at least part of the length of said shaft, each leg having its inner surface tapered at its tip,
and said leg opening member having an annular washer formed at one end and a wedge formed at its other end having tapered wedge surfaces of a shape to be received between said tapered inner leg surfaces for deflecting said legs outwardly when the nail body is driven onto said leg opening member, characterized in that said slit extends from the tip to the head of the nail, said legs (25) are connected together by at least one breakable connecting portion (27) bridging said slit (24) at a distance from the tip of said legs (25),
and said leg opening member (31) has a guide portion (32) to be received in said slit (24) and providing an upper edge at a distance from said wedge (33),
said breakable connecting portion (27) having such a strength as to be broken by the upper edge of the guide member (32) when the nail is further driven into a work piece (42) after said washer (34) has butted against the work piece (42).

2. A nail as claimed in claim 1, wherein said breakable connecting portion (27) is integral with said nail body (21) and is formed of a thin rod.

3. A nail as claimed in claim 1, wherein said leg opening member (31) comprising said guide portion (32) said washer (34) and said wedge (33) is an integral member.

4. A nail as claimed in claim 1, wherein said tapered surfaces (26) on said legs (25) and said tapered surfaces on said wedge (33) are formed as mutually interengaging longitudinal projections (28) and grooves (35).

## Patentansprüche

1. Spreizbarer Nagel mit einem Nagelkörper und einem Schenkelöffnungselement, wobei der Nagelkörper einen Kopf und einen mit diesem einstückigen Schaft aufweist, wobei der Schaft in eine Vielzahl von Schenkeln unterteilt ist, die durch einen Schlitz, der sich axial über zumindest einen Teil der Schaftlänge erstreckt, voneinander getrennt sind, wobei die innere Oberfläche jedes Schenkels an ihrer Spitze verjüngt ist, und wobei das Schenkelöffnungselement eine an einem Ende ausgebildete ringförmige Platte und einen an seinem anderen Ende ausgebildeten Keil aufweist, welcher verjüngte Keiloberflächen in einer Gestalt hat, daß sie zwischen den verjüngten inneren Schenkeloberflächen aufgenommen werden können, um die Schenkel nach außen abzulenken, wenn der Nagelkörper auf das Schenkelöffnungselement aufgeschlagen wird, dadurch gekennzeichnet, daß der Schlitz sich von der Spitze zum Kopf des Nagels erstreckt, wobei die Schenkel (25) durch zumindest einen zerbrechbaren Verbindungsabschnitt (27), der den Schlitz (24) in einem Abstand von der Spitze der Schenkel (25) überbrückt, miteinander verbunden sind, und das Schenkelöffnungselement (31) einen Führungsabschnitt (32) aufweist, der in den Schlitz (24) aufgenommen wird und eine obere Kante in einem Abstand von dem Keil (33) liefert, wobei der zerbrechbare Verbindungsabschnitt (27) eine solche Stärke hat, daß er durch die obere Kante des Führungsteils (32) zerbrochen wird, wenn der Nagel weiter in ein Werkstück (42) eingetrieben wird, nachdem die Ringplatte (34) an das Werkstück (42) angeschlagen hat.

2. Nagel nach Anspruch 1, in dem der zerbrechbare Verbindungsabschnitt (27) mit dem Nagelkörper (21) einstückig ist und aus einer dünnen Strebe gebildet wird.

3. Nagel nach Anspruch 1, in dem das Schenkelöffnungselement (31) ein einstückiges Element mit dem Führungsabschnitt (32), der Ringplatte (34) und dem Keil (33) ist.

4. Nagel nach Anspruch 1, in dem die verjüngten Oberflächen (26) auf den Schenkeln (25) und die verjüngten Oberflächen auf dem Keil (33) als gegenseitig ineinander greifende längliche Vorsprünge (28) und Nuten (35) ausgebildet sind.

**Revendications**

1. Clou expansible comportant un corps de clou et un élément d'ouverture de branches, ledit corps de clou présentant une tête et une tige en une seule pièce avec elle, ladite tige étant divisée en plusieurs branches séparées par une fente s'étendant en direction axiale sur au moins une partie de la longueur de ladite tige, chaque branche ayant une surface intérieure formant pointe à son extrémité, ledit élément d'ouverture de branches présentant une collerette annulaire formée à une extrémité et un coin formé à l'autre extrémité avec des surfaces de coin inclinées suivant une forme se logeant entre lesdites surfaces intérieures formant pointes pour dévier lesdites branches vers l'extérieur quand le corp de clou est enfoncé sur ledit élément d'ouverture de branches, caractérisé en ce que ladite fente s'étend de la pointe à la tête du clou, que lesdites branches (25) sont liées l'une à l'autre par au moins une partie de liaison cassante (27) franchissant ladite fente (24) à une certaine distance de la pointe desdites branches (25), et que ledit élément d'ouverture de branches (31) comporte une partie de guidage (32) destinée à venir dans ladite fente (24) et formant un bord supérieur à une certaine distance dudit coin (33), ladite partie de liaison cassante (27) ayant une résistance telle qu'elle soit cassée par le bord supérieur de ladite partie de guidage (32) quand on continue à enfoncer le clou dans une pièce (42) après que ladite collerette (34) soit venue buter contre la pièce (42).

2. Clou selon la revendication 1, dans lequel ladite partie de liaison cassante (27) est en une seule pièce avec ledit corps de clou (21) et est constituée d'une tige mince.

3. Clou selon la revendication 1, dans lequel ledit élément d'ouverture de branches (31) comportant ladite partie de guidage (32), ladite collerette (34) et ledit coin (33) est un élément en une seule pièce.

4. Clou selon la revendication 1, dans lequel lesdites surfaces inclinées formant pointes (26) sur lesdites branches (25) et lesdites surfaces inclinées dudit coin (33) sont formées en tant que saillies longitudinales (28) et rainures (35) s'engageant l'une dans l'autre.

FIG.1

FIG.2

FIG.3

FIG.4

FIG.5

FIG.6

FIG. 7